Europäisches Patentamt

European Patent Office

Office européen des brevets

(19)

(11) Veröffentlichungsnummer: **0 169 220**
**B1**

(12) # EUROPÄISCHE PATENTSCHRIFT

(45) Veröffentlichungstag der Patentschrift:
**21.09.88**

(21) Anmeldenummer: **85900606.6**

(22) Anmeldetag: **14.01.85**

(86) Internationale Anmeldenummer:
**PCT/CH 85/00003**

(87) Internationale Veröffentlichungsnummer:
**WO 85/03198 (01.08.85 Gazette 85/17)**

(51) Int. Cl.⁴: **A 01 K 31/22**, A 01 K 31/12

(54) **EINRICHTUNG FÜR DIE ETAGENHALTUNG VON GEFLÜGEL.**

(30) Priorität: **25.01.84 CH 324/84**

(43) Veröffentlichungstag der Anmeldung:
**29.01.86 Patentblatt 86/5**

(45) Bekanntmachung des Hinweises auf die Patenterteilung:
**21.09.88 Patentblatt 88/38**

(84) Benannte Vertragsstaaten:
**AT CH DE GB LI NL SE**

(56) Entgegenhaltungen:
**US-A-1 876 371**

(73) Patentinhaber: **KLingentalmühle AG, Klingental 17, CH- 4058 Basel (CH)**

(72) Erfinder: **TEIJGELER, Hendrik, Grellingerstrasse 16, CH- 4142 Münchenstein (CH)**

(74) Vertreter: **Scheidegger, Zwicky, Werner & Co., Stampfenbachstrasse 48 Postfach, CH- 8023 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Einrichtung für die Etagenhaltung von Geflügel, mit einem aus in Abständen voneinander angeordneten vertikalen Pfosten und auf diesen abgestützten, in Etagen übereinander horizontal angeordneten Trägern bestehenden Gestell und auf den Trägern quer zu diesen parallel in Abständen voneinander angeordneten Sitzstangen, sowie mit einer Einrichtung zum Auffangen der Exkremente und mit einer Einrichtung zum Abführen derselben im Bereich eines Bondens.

Bei einer aus der US-A-1 876 371 bekannten Einrichtung dieser Art sind zwar in zwei Etagen übereinander angeordnete Sitzstangen vorhanden, die in der oberen Etage auf Lücke inbezug auf die in der unteren Etage in Abständen vorhandenen Sitzstangen angeordnet sind, damit die Tiere nicht direkt übereinander sitzen, wobei die Exkremente der oben sitzenden auf die unten sitzenden Tiere gelangen würden, und damit die Tiere ferner auch schräg von einer Sitzstänge in der unteren zur nächsten in der höher gelegenen Etage hüpfen können. Bei diesem Anordnungsprinzip der Sitzstangen auf Lücke sind jedoch nur zwei Etagen möglich, denn in der dritten Etage kämen dann die Sitzstangen wieder unmittelbar über den Sitzstangen jeweils in der ersten Etage zu liegen, so dass die Tiere dann nicht mehr vor dem sich gegenseitigen Beschmutzen durch ihre Ausscheidungen geschützt wären. Ausserdem ist es ferner bei dieser aus der vorgenannten Patentschrift bekannten Einrichtung mit den in zwei Etagen auf Lücke angeordneten Sitzstangen auch nicht möglich, in bequem erreichbarer Nähe von den Sitzstangen einen Futtertrog anzuordnen, weil er ebenfalls nicht vor Verschmutzung durch Exkremente geschützt wäre. Eine Fütterungsmöglichkeit ist daher auch bei der vorbekannten Einrichtung gar nicht vorgesehen.

Die Tiere bleiben aber umso eher auf in Etagen angeordneten Sitzstangen, wenn sie dort Futter vorfinden. Mit der Etagenanordnung der Sitzstangen verfolgt man das Ziel, den Tieren zu ermöglichen, sich frei in einem Raum zu bewegen und artgemäss bis möglichst weit oben gelangen zu können. In der Geflügelhaltung sollen bekanntlich die bisher in grossem Umfang verwendeten Käfigbatterien ersetzt werden, die den Tieren überhaupt keine Bewegungsmöglichkeiten boten. Mit den Käfigbatterien liess sich ein Stallraum bis unter die Decke ausnutzen, d. h. man konnte sehr viele Tiere pro m² Bodenfläche unterbringen.

Der vorliegenden Erfindung lag daher die Aufgabe zugrunde, den Raum auch in der Höhe soweit wie möglich auszunutzen, aber dabei unter Verzicht auf die Käfigbatterien eine Tierhaltung mit voller Freizügigkeit für die Tiere in ihrer Bewegung zwischen dem Boden und der höchsten Sitzstange zu ermöglichen. Die Tiere sollen auf einem Einstreuboden scharren und in verschiedener Höhe über dem Boden sitzen und Futter einnehmen können und die Versorgung mit Futter und Wasser soll rationell mittels Fördereinrichtungen durchführbar sein. Für die Ausnutzung der ganzen Stallhöhe müssen die Etagen daher durch einen die Exkremente aufnehmenden Boden jeweils voneinander getrennt sein und das Hüpfen von einer zur nächsten Etage muss daher in einer auf der Mitte verlaufenden Symmetrieebene ermöglicht werden, zu der hin die zueinander höhenversetzten Etagen offen sind.

Zur Lösung dieser Aufgaben dient eine Einrichtung mit den Merkmalen gemäss dem kennzeichnenden Teil des Anspruchs 1.

Der Vorteil dieser Einrichtung besteht darin, dass die Anzahl der übereinander anzuordnenden Etagen nicht beschränkt ist und dass die Herstellung dieser Einrichtung sehr praktisch und zweckmässig ist, weil die auslegerartigen Tragarme mit Sitzstangen und Futtertrog in bei allen Etagen gleicher Ausgestaltung eine Serienfertigung zulassen. Die Einrichtung bietet ferner die angestrebten Vorteile, dass die Tiere sich frei bewegen können und in jeder beliebigen Höhe einen Platz zum Sitzen und Fressen aufsuchen können, wozu sie wie in einem Treppenhaus in der Mitte von einer zur nächsten Etage gelangen.

Weitere Einzelheiten und Vorteile der Erfindung ergeben sich aus der nachfolgenden Beschreibung und den Zeichnungen, in denen eine Ausführungsform des Erfindungsgegenstandes rein beispielsweise dargestellt ist. Es zeigen:

Fig. 1 die Einrichtung in Seitenansicht, schematisch dargestellt;

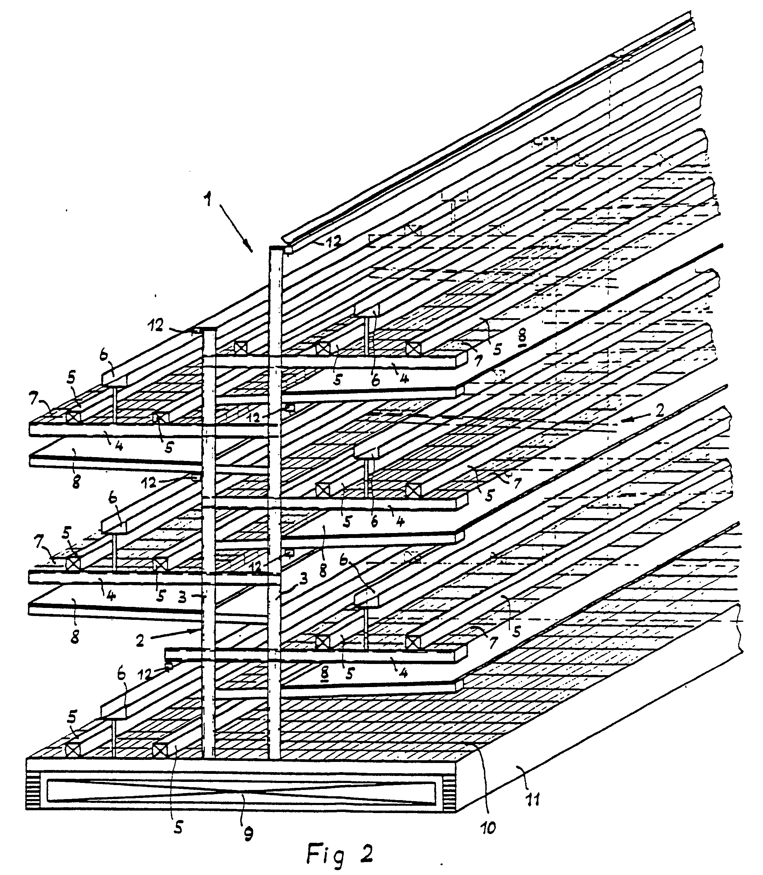

Fig. 2 die Einrichtung gemäss Fig. 1, schaubildlich und abgebrochen dargestellt;
Fig. 3 eine Hälfte der Einrichtung und die benachbarte Legestation, schematisch dargestellt.

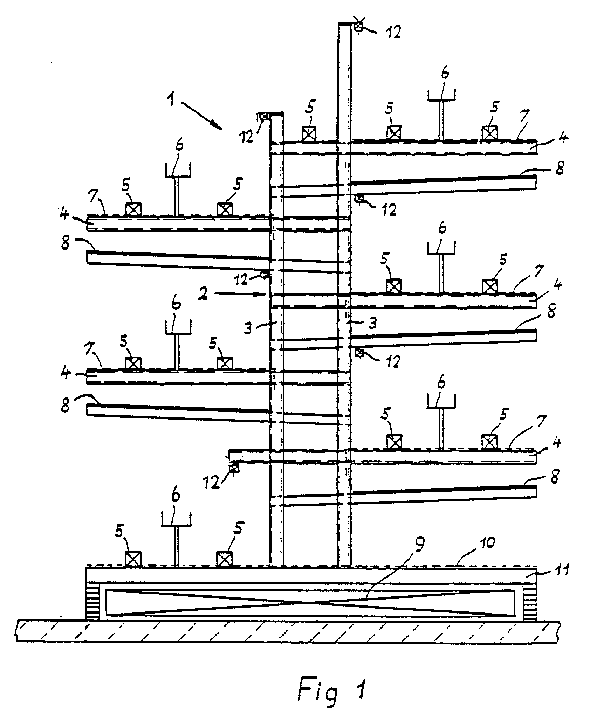

Die Einrichtung für die Etagenhaltung von Geflügel weist ein Gestell 1 auf, welches in Abständen von 1 - 2 m hintereinander angeordnete Pfosten 2, von denen jeder aus nebeneinander stehenden vertikalen Stützen 3 besteht, und an den Pfosten 2 befestigte, auslegerartige Tragarme 4 umfasst. Die nach den gegenüberliegenden Seiten der Pfosten 2 sich erstreckenden Tragarme 4 sind auf der einen Seite höhenversetzt in bezug auf die auf der gegenüberliegenden Seite der Pfosten vorhandenen Tragarme angeordnet, wobei die Tragarme auf der einen Seite immer auf der Abstandsmitte der Tragarme auf der gegenüberliegenden Seite angeordnet sind. Gemäss Fig. 1 besitzt das Gestell 1 auf der linken Seite zwei Etagen und auf der rechten Seite drei Etagen.

Auf sämtlichen Tragarmen 4, die sich auf gleicher Höhe befinden bzw. die gleiche Etage bilden, sind jeweils zwei zu den Tragarmen 4 sich quer erstreckende Sitzstangen 5 abgestützt, die im Abstand voneinander angeordnet sind und zwischen denen auf der Mitte parallel zu den Sitzstangen und etwas höher ein längsverlaufender Futtertrog 6 angeordnet ist, in welchem eine nicht dargestellte Transportvorrichtung für die Verteilung des Futters über die ganze Gestellänge längsverschieblich ist.

Über sämtliche jeweils auf der gleichen Etage befindliche Tragarme 4 und unterhalb der Sitzstangen 5 ist eine über die ganze Gestellänge sich erstreckende Fläche 7 aus einem grobmaschigen Drahtgewebe ausgespannt, durch welche Fläche die Etagen voneinander getrennt sind, aber die Exkremente der auf den Sitzstangen 5 sitzenden Tiere auf einen Zwischenboden 8 hindurchfallen können, der sich jeweils unterhalb der Tragarme 4 über die ganze Gestellänge erstreckt und der horizontal oder zu den Pfosten 2 hin etwas geneigt angeordnet ist. Mit Hilfe von in der Zeichnung nicht dargestellten Kotschrappern wird der Kot zu den Pfosten hin transportiert und fällt über die innenliegende Kante des Zwischenbodens 8 nach unten auf eine Transportvorrichtung 9, die in einem ebenfalls durch ein Drahtgewebe 10 oben abgedeckten Sockelteil 11 angeordnet ist, der sich unterhalb der Pfosten 2 befindet bzw. auf welchem die Pfosten befestigt sind. Die Transportvorrichtung 9 erstreckt sich ebenfalls über die ganze Gestellänge.

In der Nähe der Pfosten 2 befindet sich jeweils unterhalb eines Zwischenbodens 8 eine Nippeltränke 12 für die Versorgung der Tiere mit Trinkwasser.

Die Anordnung der auf den einzelnen Etagen zu beiden Seiten der Pfosten 2 höhenversetzten Sitzstangen 5 ermöglicht es den Tieren, dass sie stufenweise und von der einen zur anderen Seite hin und her auf die nächsthöhere Sitzstange 5 hüpfen, um nach oben zu gelangen, während ein direkter Anflug zu den oberen Sitzstangen vom Innern des Gestells aus nicht möglich ist. Da die Tiere auf jeder Etage Futter erhalten, bevölkern sie gleichmässig alle Etagen des Gestells. Das Hinüberwechseln von der einen zur anderen Seite ist nur dort behindert, wo sich die in Abständen voneinander angeordneten Pfosten 2 befinden.

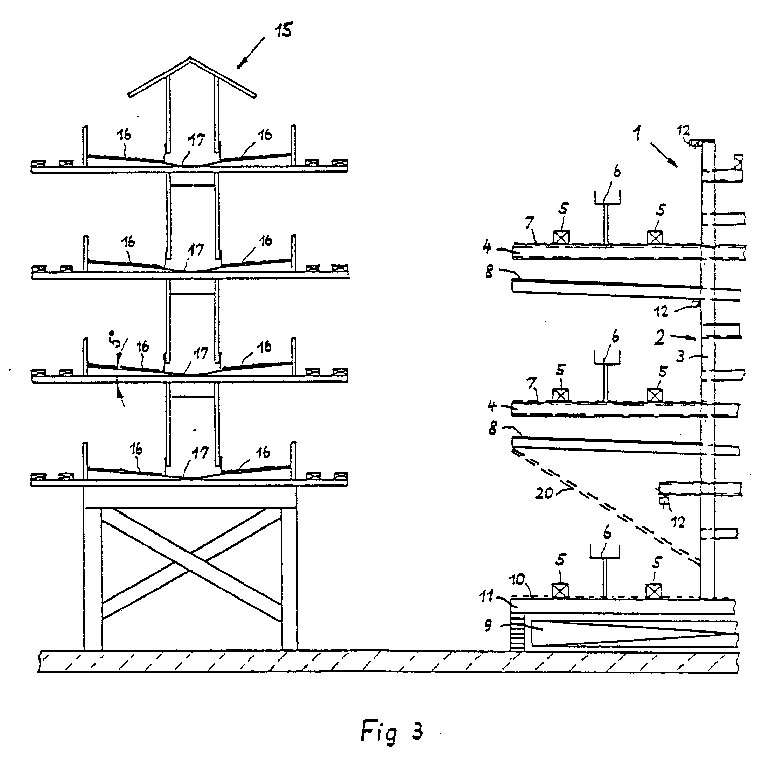

Zum Eierlegen sucht das Tier eines der in einer im Abstand von dem Gestell 1 angeordneten Einrichtung 15 vorhandenen Abrollnester 16 auf, die gemäss Fig. 3 ebenfalls etagenweise übereinander in der Einrichtung 15 angeordnet sind und die von dem Gestell 1 aus durch Hinüberhüpfen erreichbar sind. Die Einrichtung 15 besitzt ebenfalls zu beiden Seiten einer Mittelsymmetrieebene in Etagen übereinander angeordnete Abrollnester 16, wenn in einer symmetrischen Anordnung links und rechts von dieser Einrichtung je ein Gestell 1 gemäss Fig. 1 in dem Stall aufgestellt ist. Die von dem Abrollnest 16 zur Mitte hin abrollenden Eier gelangen auf eine in jeder Etage angeordnete Fördereinrichtung 17.

In Fig. 3 ist ferner beim abgebrochen dargestellten Gestell 1 mit gestrichelten Linien ein Zwischenboden 20 eingezeichnet, welcher in Abwandlung des Gestells 1 gemäss Fig. 1 anstelle des Zwischenbodens 8 unter einem so steilen Winkel angeordnet ist, dass der Kot durch Schwerkraft nach unten gelangt und auf Kotschrapper verzichtet werden kann. Dabei geht aus Fig. 3 auch hervor, dass bei einer steilen Anordnung der Zwischenböden 20 für den Kot die Abstände zwischen den einzelnen Etagen grösser sein müssen, damit die Tiere von den dann genügend weit unterhalb der schrägen Zwischenböden 20 angeordneten Sitzstangen 5 ungehindert zur anderen Seite hinüber wechseln können. Das bedeutet, dass bei einer solchen Anordnung der Zwischenböden und bei gleicher Anzahl von Etagen das Gestell insgesamt höher wird und eine grössere Raumhöhe erforderlich ist.

## Patentansprüche

1. Einrichtung für die Etagenhaltung von Geflügel, mit einem aus in Abständen voneinander angeordneten vertikalen Pfosten (2) und auf diesen abgestützten, in Etagen übereinander horizontal angeordnete Trägern bestehenden Gestell und auf den Trägern quer zum diesen parallel in Abständen voneinander angeordneten Sitzstangen (5), sowie mit einer Einrichtung (8) zum Auffangen der Exkremente und mit einer weiteren Einrichtung (9) zum Abführen derselben im Bereich eines Bodens, dadurch gekennzeichnet, dass als Träger eine Vielzahl von auslegerartig und unter sich gleich ausgebildeten Tragarmen (4) zu beiden Seiten von auf der Mitte des Gestells in Abständen hintereinander angeordneten Pfosten (2) und wechselseitig stufenweise höhenversetzt angeordnet sind, daß auf der gleichen Etage befindliche Tragarme (4) jeweils zwei über alle Tragarme sich erstreckende Sitzstangen (5) und auf der Mitte zwischen den Sitzstangen (5) einen längsverlaufenden Futtertrog (6) in bei allen Etagen gleicher Anordnung aufweisen und daß die Einrichtung (8) zum Auffangen der Exkremente auf jeder Etage unter den Tragarmen und Sitzstangen jeweils als Zwischenboden angeordnet ist.

2. Einrichtung nach Anspruch 1, dadurch gekennzeichnet, dass sie im Abstand von einer in Etagen übereinander angeordnete Abrollnester (16) für die Eiablage aufweisenden Einrichtung (15) aufgestellt ist.

## Claims

1. Installation for the stage breeding of poultry, comprising a frame consisting of vertical posts (2) disposed at distances from one another and, supported thereon, horizontal supports disposed in stages one above the other and roosts (5) disposed on the supports transversely to the latter in parallel relationship and at distances from one another, and comprising means (8) for collecting the excreta and further means (9) for discharging the same in the region of a floor, characterised in that the supports comprise a plurality of cantilever-like identical support arms (4) on either side of posts disposed seriatim at distances on the middle of the frame and are disposed alternately step-wise at different levels, and support arms (4) situated on the same stage each have two roosts (5) extending over all the support arms and in the middle between the roosts (5) a longitudinally extending feeding trough 6 in an identical arrangement on all the stages and the means (8) for collecting the excreta is on each stage disposed below the support arms and roosts to form an intermediate floor in each case.

2. Installation according to claim 1, characterised in that it is erected at a distance from an installation (15) comprising roll-down nests (16) for egg laying, said nests being disposed in stages one above the other.

**Revendications**

1. Installation pour l'élevage de volaille en étages, comprenant un cadre comprenant des montants (2) verticaux espacés et des supports horizontaux disposés en étages les uns sur les autres et s'appuyant sur les montants et des barres de grille (5) parallèles espacées, disposées sur lesdits supports et s'étendant transversalement par rapport à ces derniers, ainsi qu'un dispositif (8) destiné à recevoir les excréments et un autre dispositif (9), monté à proximité du fond, pour évacuer les excréments, caractérisée en ce que les supports sont formés par une multiplicité de bras porteurs (4) identiques montés en porte à faux et étages alternativement des deux côtés de montants (2) disposés les uns derrières les autres et espacés sur le milieu du cadre, en ce que les bras porteurs (4) se trouvant sur un même étage présentent deux barres de grille (5) s'étendant sur tous les bras porteurs et un récipient de fourrage (6) longitudinal disposé entre les barres de grille (5), arrangés de même manière sur tous les étages, et en ce que le dispositif (8) destiné à recevoir les excréments est disposé sur chaque étage sous les bras porteurs et les barres de grille sous forme d'un fond intermédiaire.

2. Installation selon la revendication 1, caractérisée en ce qu'elle est montée à distance d'un dispostif (15) présentant des nids autovidants pour oeufs.

Fig 1

Fig 2

Fig 3